# EUROPÄISCHE PATENTANMELDUNG

(11) **EP 0 629 737 A1**
(43) Veröffentlichungstag der Anmeldung: **21.12.1994**
(21) Anmeldenummer: 94109516.8
(22) Anmeldetag: 20.06.1994
(51) Int. Cl.: D07B 7/14

(54) **Verfahren zum Herstellen eines Steigungskabels mit Dämmlage**

(30) Priorität: 18.06.1993 DE 4320277
(71) Anmelder: meflex Telecontrol GmbH & Co., D-35630 Ehringshausen (DE)
(72) Erfinder:
(74) Vertreter: Müller, Eckhard, Dr.

(57) **Zusammenfassung**

Es handelt sich um ein Verfahren zum Herstellen eines Steigungskabels, welches ein Drahtseil (1), eine um das Drahtseil (1) schraubenförmig gewundenen Steigungswendel (2) und eine zwischen den Windungen des Steigungskabels eingewickelte Dämmlage (5), bspw. einen beflockten Faden aufweist. Um ein wirksames Festlegen der Dämmlage (5) an dem Steigungskabel zu erreichen, ist es vorgesehen daß auf das Drahtseil (1) zunächst ein Klebstoff aufgetragen wird, danach die Steigungswendel (2) auf das Drahtseil (1) aufgebracht und schließlich die Dämmlage (5) zwischen die Windungen des Steigungskabels eingewickelt wird.

## Beschreibung

Die Erfindung bezieht sich auf ein Verfahren zum Herstellen eines Steigungskabels gemäß dem Oberbegriff des Anspruches 1.

Derartige Steigungskabel werden getrieblich z. B. zusammen mit einem Ritzel verwendet, das nach Art eines Zahnstangen-Ritzel-Antriebes zwischen die schraubenförmig auf das Drahtseil gewundene Steigungswendel eingreift. Antriebe dieser Art werden bspw. bei Schiebedächern in Kraftfahrzeugen eingesetzt, wobei das Steigungskabel die Aufgabe einer in einem Rohr geführten flexiblen Zahnstange übernimmt.

Um eine Geräuschentwicklung des innerhalb eines Rohres geführten Steigungskabels zu unterbinden, ist es bereits aus der DE 35 13 093 A1 bekannt, zwischen den Windungen der Steigungswendel einen beflockten Faden anzukleben, d. h. zunächst eine Klebeschicht zwischen den Windungen aufzubringen und den Faden auf diesen Klebstoff zu wickeln. Nachteilig hierbei ist, daß es bei Produktionsunterbrechung, bspw. während der Nachtzeit, infolge des Aushärtens des Klebstoffs zu Verstopfungen der Auftragsdüsen kommen kann und einzelne Abschnitte des Steigungskabels nicht mit Klebstoff versehen sind. Sofern der Flockfaden jedoch nicht überall fest an der Steigungswendel gehalten ist, führt dies unweigerlich zu einem Ablösen des gesamten Flockfadens bei Eingreifen eines Ritzels zwischen die Windungen der Steigungswendel. Ein weiterer Nachteil dieses bekannten Verfahrens ist die technisch aufwendige Auftragung des Klebstoffs zwischen den Windungen des Steigungskabels. Der Klebstoff wird dabei rotierend aufgebracht, wobei die Umdrehungen der Auftragsdüse exakt auf die Durchlaufgeschwindigkeit des Seiles abgestimmt sein muß, was mitunter ebenfalls Probleme schafft. Als Klebstoff wurde bei diesem bekannten Verfahren ein Dispersionsklebstoff mit Wasseranteilen verwendet, was u. U. zu Korrosionen an der Steigungswendel führen kann.

Auch ist schon versucht worden, den beflockten Faden aus thermoplastischem Kunststoff herzustellen und das Steigungskabel vor dem Bewickeln auf eine Temperatur zu erwärmen, die jenseits des Schmelzpunktes des Kunststoffes liegt, so daß die Flocken des Flockfadens anschmelzen und an dem Metall ankleben. Auch hierbei ist eine äußerst präzise Verfahrenführung mit exakt einzuhaltenden Parametern Voraussetzung für eine ausreichend feste Verbindung von Flockfaden und Steigungskabel.

Davon ausgehend liegt der Erfindung die Aufgabe zugrunde, ein Verfahren anzugeben, welche in einfacher Weise durchführbar und ein wirksames Festlegen der Dämmlage an dem Steigungskabel ermöglicht.

Zur Lösung der Aufgabe ist es nach der Erfindung vorgesehen, daß auf das Drahtseil ein Klebstoff aufgetragen wird, danach die Steigungswendel auf das Drahtseil aufgebracht und schließlich die Dämmlage zwischen den Windungen der Steigungswendel eingewickelt wird.

Dadurch, daß bei dem erfindungsgemäßen Verfahren das Drahtseil schon vor Aufbringen der Steigungswendel mit Klebstoff versehen wird, ist eine gleichmäßige Auftragung des Klebstoff erreicht, was die Voraussetzung für eine optimale Festlegung des Flockfadens an der Steigungwendel bildet. Wird nämlich wie bereits in der DE 36 14 241 A1 ausgeführt, zu viel Klebstoff aufgetragen, so steigt dieser zwischen den Windungen der Steigungswendel nach oben und verhärtet die Beflockung, die vom Faden getragen wird. Wird dagegen zu wenig Klebstoff aufgetragen, so besteht die Gefahr, daß sich der Faden löst und abwickelt.

In einer ersten besonderen Ausführungsform der Erfindung kann das Steigungskabel vor oder nach Aufbringung der Dämmlage auf die Reaktionstemperatur des Klebstoffs erhitzt werden.

Auch empfiehlt es sich, daß das mit Klebstoff versehene Drahtseil vor Aufbringen der Steigungswendel auf eine Temperatur unterhalb der Reaktionstemperatur des Klebstoffs abgekühlt wird, um etwaigen Problemen beim Aufwickeln der Steigungswendel auf das Drahtseil vorzubeugen.

Das Erhitzen des mit Klebstoff versehenen Steigungskabels kann induktiv durch Strombeaufschlagung erfolgen.

Dadurch, daß der Klebstoff zunächst auf das Drahtseil aufgetragen wird, ist es in fertigungstechnisch besonders vorteilhafter Weise nach der Erfindung auch möglich, den Klebstoff über eine Ringdüse aufzutragen, wie es sich u. U. auch empfehlen kann, das Drahtseil durch ein Bad mit Klebstoff durchlaufen zu lassen. Ebenso ist es denkbar, in rationeller Weise den Klebstoff im Sprühverfahren auf das Drahtseil aufzubringen.

Nach einem besonderen Gedanken der Erfindung ist es vorgesehen, daß als Klebstoff ein Schmelzklebstoff verwendet wird. Ein Schmelzklebstoff, bspw. auf der Basis von Polymeren, Copolyamid u. dgl., hat die vorteilhafte Eigenschaft, keine Wasseranteile zu besitzen, so daß es durch das Aufbringen des Klebstoffs auf dem Drahtseil zu keinen Korrosionen an dem Steigungskabel kommen kann. Der Schmelzklebstoff bildet also gleichsam eine Korrosionsschutz für die Unterkonstruktion des Steigungskabels.

Nach einem Gedanken der Erfindung ist es vorgesehen, daß der Klebstoff als pulverförmiger Schmelzklebstoff vorliegt und mittels Pulverbeschichtung, bzw. mittels elektrostatischer Beschichtung, aufgetragen wird, was eine exakte Einhaltung der Auftragdicke des Schmelzklebstoffs, bspw. zwischen 0,1 und 0,5 mm, ermöglicht.

Um sicherzustellen, daß der mittels Pulverbeschichtung oder mittels elektrostatischer Beschichtung aufgetragene pulverförmige Schmelzklebstoff sicher und zuverlässig an dem Drahtseil haftet, ist es nach der Erfindung vorgesehen, den Schmelzklebstoff vor Aufbringung der Steigungswendel auf das Drahtseil auf seine Reaktionstemperatur zu erwärmen und ggf. anschließend wieder abzukühlen.

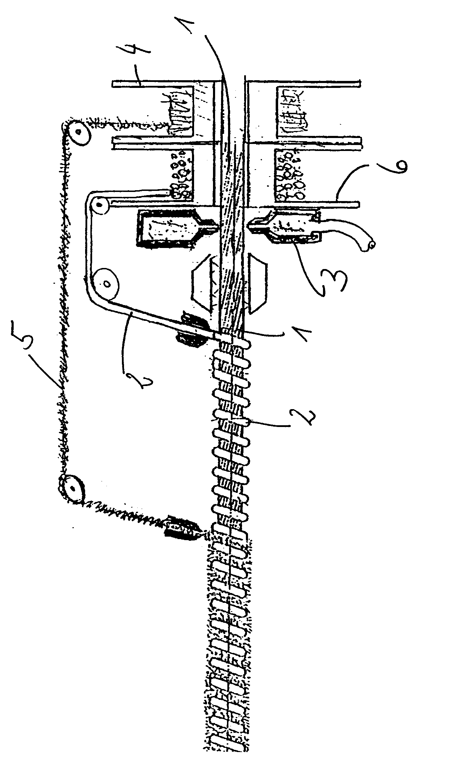

Die Erfindung wird nachfolgend anhand eines in der Zeichnung dargestellten Beispieles näher erläutert.

Gemäß der einzigen Figur weist das Steigungskabel ein Drahtseil 1 auf, um welches ein Draht schraubenförmig gewunden ist, welcher die Steigungswendel 2 bildet.

Zwischen die Windungen der Steigungswendel 2 ist eine Dämmlage 5 in Form eines beflockten Fadens eingewickelt, welcher bei der Führung des Steigungskabels innerhalb eines (nicht dargestellten) Führungsrohres eine Geräuschminderung bewirkt. Der Flockfaden 5 ist mittels eines Klebstoffs an dem Steigungskabel festgelegt.

Dies erfolgt bei dem hier gewählten Ausführungsbeispiel dadurch, daß auf das Drahtseil 1 ein Schmelzklebstoff mittels einer Ringdüse 3 aufgetragen wird; dies kann selbstverständlich auch durch eine elektrostatische Auftragung geschehen. Danach wird das Drahtseil 1 mit Klebstoff auf die Schmelztemperatur des Klebstoffs erhitzt, damit der Klebstoff an dem Drahtseil 1 haftet. Sodann erfolgt ein Abkühlen des mit Klebstoff versehenen Drahtseiles 1 unterhalb die Reaktionstemperatur des Klebstoffs; was hier nicht näher dargestellt ist. Im nächsten Verfahrensschritt wird die Steigungswendel 2 auf das Drahtseil 1 gewickelt. Hierfür ist der Wendeldraht 2 auf einer Spule 6 aufgewickelt, welche mit einer zentrischen Bohrung für den Draht 1 versehen ist. Das Aufbringen des Wendeldrahtes 2 erfolgt dadurch, daß die Spule 6 um den Draht 1 rotiert und der Draht 1 in axialer Richtung durch die Spule 6 läuft. Hierbei wird der Wendeldraht 2 von der Spule 6 abgezogen und auf den Draht 1 gewickelt. Danach wird das Steigungskabel wieder erwärmt, bis die Schmelztemperatur des Klebstoffs erreicht ist. Schließlich wird der Flockfaden 5 zwischen die Windungen der Steigungswendel 2 eingewickelt, was in analoger Weise zum Aufwickeln des Wendeldrahtes 2 mittels einer um den Draht 1 rotierenden Spule 4 für den Flockfaden 5 erfolgt. Dabei wird der Faden 5 von der Spule 4 abgezogen und zwischen die Schraubengänge der Steigungswendel 2 gewickelt.

Selbstverständlich ist es auch möglich, bspw. die beiden letzten Verfahrensschritte zu vertauschen, also den Flockfaden 5 zwischen die Windungen der Steigungswendel 2 einzuwickeln und erst danach das Steigungskabel bis über die Schmelztemperatur des Schmelzklebstoffs zu erhitzen.

## Patentansprüche

1. Verfahren zum Herstellen eines Steigungskabels, welches ein Drahtseil (1), eine um das Drahtseil (1) schraubenförmig gewundenen Steigungswendel und eine zwischen den Windungen des Steigungskabels eingewickelte Dämmlage (5), bspw. einen beflockten Faden aufweist, dadurch gekennzeichnet, daß auf das Drahtseil (1) zunächst ein Klebstoff aufgetragen wird, danach die Steigungswendel (2) auf das Drahtseil (1) aufgebracht und schließlich die Dämmlage zwischen die Windungen des Steigungskabels (2) eingewickelt wird.

2. Verfahren nach Anspruch 1, dadurch gekennzeichnet, daß das Steigungskabel vor oder nach Aufbringen der Dämmlage (5) auf die Reaktionstemperatur des Klebstoffs erhitzt wird.

3. Verfahren nach Anspruch 1 oder 2, dadurch gekennzeichnet, daß das mit Klebstoff versehene Drahtseil (1) vor Aufbringen der Steigungswendel (2) auf eine Temperatur unterhalb der Reaktionstemperatur des Klebstoffs abgekühlt wird.

4. Verfahren nach einem der Ansprüche 1 bis 3, dadurch gekennzeichnet, daß das Erhitzen des mit Klebstoff versehenen Steigungskabels induktiv erfolgt.

5. Verfahren nach einem der Ansprüche 1 bis 4, dadurch gekennzeichnet, daß der Klebstoff über eine Ringdüse (3) aufgetragen wird.

6. Verfahren nach einem der Ansprüche 1 bis 5, dadurch gekennzeichnet, daß das Drahtseil (1) ein Bad mit Klebstoff durchläuft.

7. Verfahren nach einem der Ansprüche 1 bis 6, dadurch gekennzeichnet, daß der Klebstoff im Sprühverfahren aufgebracht wird.

8. Verfahren nach einem oder mehreren der vorhergehenden Ansprüche, dadurch gekennzeichnet, daß als Klebstoff ein, vorzugsweise pulverförmiger Schmelzklebstoff verwendet wird.

9. Verfahren nach Anspruch 8, dadurch gekennzeichnet, daß der Schmelzklebstoff mittels Pulverbeschichtung aufgetragen wird.

10. Verfahren nach Anspruch 9, dadurch gekennzeichnet, daß der Schmelzklebstoff vor Aufbringen der Steigungswendel (2) auf das Drahtseil (1) auf seine Reaktionstemperatur erwärmt und ggf. anschließend wieder abgekühlt wird.

11. Verfahren nach einem der Ansprüche 1 bis 11, dadurch gekennzeichnet, daß der Schmelzklebstoff Polyamide, vorzugsweise Copolyamide, enthält.
